# EUROPEAN PATENT APPLICATION

(11) **EP 1 770 147 A1**
(43) Date of publication of application: **04.04.2007**
(21) Application number: 05751152.9
(22) Date of filing: 14.06.2005
(51) Int. Cl.: C09K 11/63, C09K 11/00, C09K 11/08, H05B 33/14

(54) **FLUORESCENT SUBSTANCE AND PROCESS FOR PRODUCING THE SAME, AND PARTICLE DISPERSION-TYPE EL DEVICE USING THE SAME**

(30) Priority: 24.06.2004 JP 2004185769
(71) Applicant: Sumitomo Electric Industries, Ltd., Osaka-shi, Osaka 541-0041 (JP)
(72) Inventor: KAWAI, C., Itami Works of Sumitomo Elec. Ind. Ltd., Itami-shi, Hyogo 6640016 (JP); INOUE, R., Itami Works of Sumitomo Elec. Ind. Ltd., Itami-shi, Hyogo 6640016 (JP)
(74) Representative: Setna, Rohan P.
(86) International application number: PCT/JP2005/010868
(87) International publication number: WO 2006/001194

(57) **Abstract**

The present invention provides an EL phosphor in which the phosphor contains a conductor phase including carbon nanotubes, carbon nanohorns, or another carbon component. The phosphor containing a conductor phase is a sulfide that has Ag- or Cu-activated ZnS as a main component thereof. In particular, the present invention provides a phosphor expressed by the general formula Zn(1-x) AₓS : Ag/Cu, D (where A is at least one type of group 2A element selected from the group consisting of Be, Mg, Ca, Sr, and Ba; D is a coactivator and is at least one element selected from the group consisting of group 3B or group 7B elements; and 0≤x<1), or an amorphous oxynitride phosphor comprising B-N-O, Si-O-N, Al-O-N, Ga-O-N, Al-Ga-O-N, In-Ga-O-N, or In-Al-O-N, which are activated by Eu²⁺, Gd³⁺, Yb²⁺, or another earth metal ion. A surface light emitter manufactured using this phosphor has a conductor phase present therein, and thereby provides a particle-dispersed EL device for emitting high-intensity UV rays or nearby visible light when excited by an electric field.

## Description

### [Technical Field]

The present invention relates to a dispersed EL (electroluminescence) phosphor, and particularly relates to a dispersed EL phosphor for emitting at high intensity and high efficiency visible light or light in a UV light range, to a method for manufacturing the phosphor, and to a particle-dispersed EL device in which the phosphor is used as a surface light emitter.

### [Background Art]

In view of recent environmental issues, an urgent need has arisen for functionality associated with isolating, decomposing, or sterilizing toxic substances, bacteria, viruses, and the like. Photocatalytic materials have drawn attention as means for performing such decomposition and sterilization. Anatase TiO₂ is a typical example of a photocatalyst, and generally exhibits a photocatalytic effect under UV rays having a wavelength of 400 nm or less. Rutile TiO₂, which has also recently been developed, functions at about 420 nm but has a lower level of functionality relative to that of anatase TiO₂.

Mercury lamps and light-emitting diodes are devices that efficiently emit light having such wavelengths, but such devices are unsuitable for uniformly exciting photocatalysts with large surface areas because such devices are point or linear light sources. Inorganic electroluminescence (EL) devices are able to emit light uniformly over large surface areas. Such devices are provided with a surface light emitter in which a phosphor powder having a light-emitting function is dispersed in a dielectric resin. An AC electric field is mainly applied, causing light to be emitted.

Cu-activated ZnS is the most widely known phosphor that emits light when excited by an electric field. The description on page 324 of Non-Patent Document 1 states that in particle-dispersed EL devices, "Cu is deposited along line defects in the ZnS particles, and CuₓS is formed. The CuₓS exhibits considerable electrical conductivity. (Portion omitted). At this point, the CuₓS can be considered to be a p-type or metallic material with extremely good conductivity. Therefore, when an electric field is applied to the ZnS particles, an electric field (10⁵ to 10⁶ V/cm) that is greater than the average electric field is generated in the surface of the CuₓS-ZnS. Due to this high electric field, tunneling causes electrons to be temporarily implanted in the ZnS from an interface level. Additionally, the electrons are recombined with electron holes trapped in the center of illumination, and light is emitted. The electrons are also thought to be implanted via the Schottky barrier of the CuₓS-ZnS bond. When the center of illumination is a Mn²⁺ or a Re³⁺ (rare earth element) ion, the resulting electrons are presumed to collide directly with these ions and excite them." The Non-Patent Document states that, in a particle-dispersed EL device, a conductive phase such as CuₓS is a prerequisite for light to be emitted. Although Cu-activated-ZnS phosphors emit light when excited by an electric field, the shortest wavelength of the emitted light is about 450 nm, only blue light is emitted, and UV light is not emitted.

Patent Document 1 describes a technique for endowing a phosphor with a conductive phase, wherein a particle-dispersed EL phosphor is produced by depositing Cu or Li on the surface of an alkaline-earth sulfide phosphor. However, no reports have indicated that such a phosphor emits UV rays, and high intensity emission cannot be expected because the region in which the phosphor is excited and emits light is limited to the surface of the phosphor in which a metal phase is present.

A ZnS phosphor that is activated by Ag has also been proposed as a highly efficient phosphor which emits short-wavelength light and whose matrix is ZnS. However, such a phosphor emits blue light having a wavelength of 450 nm, and only emits light in the visible light range. In this light-emitting mechanism, an acceptor level is formed by the Ag activator added to the ZnS; a donor level is formed by adding Cl, Al, or another coactivator; and electrons and electron holes are recombined between the donor level and the acceptor level. As a result, DA pair (also known as Green-Cu, referred to as G-Cu below) blue light having a wavelength of about 450 nm will be emitted. The wavelength of the emitted G-Cu light can be made shorter by using a mixed crystal of ZnS and a compound that has a larger band gap than ZnS as the phosphor matrix, and increasing the band gap thereof. Group 2A element sulfides can be cited as compounds that can increase the band gap by converting the ZnS to a mixed crystal. However, with Zn_{0.8}Mg_{0.2}S, which is obtained by dissolving MgS in solid form in ZnS to the solid-dissolution limit of the former relative to the latter, the wavelength can only be shortened to the violet range greater than 400 nm.

Patent Document 2 teaches that luminous efficiency and chromaticity can be improved by simultaneously adding a Cu or Ag activator and a coactivator having a higher molar concentration to the phosphor matrix, which is a mixed crystal semiconductor comprising ZnS and an group 2A element sulfide. However, the document states that in the spectrum of the emitted light, G-Cu light is primarily emitted, and no other light is emitted. The wavelength of the emitted light is within the visible light range.

Even if the band gap of the ZnS is increased to shorten the wavelength of the G-Cu blue light emitted by the ZnS phosphor, only light in the violet range will be obtained, and no light will be emitted in the UV ray range. On the other hand, in a ZnS phosphor that is activated by Cu or Ag, Blue-Cu (referred to as B-Cu below) light is emitted on the short wavelength side of the G-Cu light when Cu or Ag penetrates the interstices and not the Zn positions on the crystal lattice. This short-wavelength light is emitted by making the activator concentration higher than the coactivator concentration.

When the activator is Cu, the fact that the Cu⁺ ion (0.6 A) is about the same size as the Zn²⁺ ion (0.6 A) means the activator can readily penetrate the interstitial gaps, and Blue-Cu light will be emitted. Furthermore, the Cu ions that cannot enter the interstices escape from the crystal lattice and react with the S of the ZnS. Cu₂S or other highly conductive copper sulfides assume an acicular structure and form in the gaps of the stacking faults present in the ZnS crystal. When an AC electric field is applied to an inorganic EL device in which such a phosphor is used, an electric field having a value equivalent to or greater than the locally applied electric field is applied to the periphery of the copper sulfide, electrons are released from the distal ends of the acicular Cu₂S, and EL light is emitted. However, the wavelength can be reduced to only about 450 nm because the Cu acceptor level is deep.

On the other hand, when Ag is used as the activator, the Ag ions cannot penetrate the interstices as readily as the Cu ions because the Ag ions (tetrahedrally coordinated, 1.0 A) are larger than the Cu ions. However, Ag ions can be made to penetrate the interstitial gaps by solid-dissolving Mg with the ZnS to enlarge the lattice, thereby allowing Blue-Cu light of 400 nm or less to be emitted. However, the Ag ions that could not enter the interstices form Ag₂S or another poorly conductive Ag sulfide, and since a concentrated electric field cannot be produced as described above, EL light cannot be emitted at an intensity required for practical application.

If doping is carried simultaneously using both Ag and Cu, only Cu with a small ion radius will penetrate the interstices, and the wavelength of the Blue-Cu light will inevitably be 450 nm.

Furthermore, Non-patent Document 2 describes a particle-dispersed EL in which hBN is used as a phosphor. The document states that "a sample is dispersed in castor oil; and quartz, a mesh electrode, a dispersion layer, an insulating sheet, and a metallic electrode are used to form a cell. The dispersion layer has a thickness of 20 to 50 µm. An attempt was also made to mix copper powder or another conductive powder with the dispersion layer." However, the document states that "the hBN phosphor gave off a long afterglow of differing intensities that could be seen by the naked eye." This means that light was emitted in the visible range, but nothing was disclosed regarding the emission of light in the UV range. The document also states that "the intensity of the light was extremely low." This is thought to be due to the presence of the conductive powder on the exterior and not the interior of the phosphor. In other words, in a particle-dispersed EL device in which copper powder or another conductive powder is mixed with the dispersion layer as described in Non-Patent Document 2, high intensity light cannot be expected because a conductor layer is not present in the interior of the phosphor. Furthermore, oxynitride phosphors cannot be employed in practical application as particle-dispersed EL devices because they do not emit light when excited by an electric field.
[Patent Document 1] Japanese Laid-Open Patent Application No. 62-68882
[Patent Document 2] Japanese Laid-Open Patent Application No. 2002-231151
[Non-Patent Document 1] "The Phosphor Handbook," Published by Ohmsha, Ltd., First Edition (December 25, 1987), pg. 322-325
[Non-Patent Document 2] National Institute for Research in Inorganic Materials Research Report No. 27, Science and Technology Agency (1981), page 61

### [Disclosure of Invention]

### [Problems to Be Solved by the Invention]

As described above, phosphors are used in the following devices: particle-dispersed EL devices which use a ZnS phosphor activated by Cu or Ag and which emit light when exited by an electric field; particle-dispersed EL devices that use a phosphor in which a the surface of an alkaline-earth metal sulfide is endowed with a conductive phase ; or particle-dispersed EL devices that use a hBN phosphor produced by mixing copper or another conductive powder with the dispersion layer. Such phosphors cannot emit light in the UV range or in the nearby visible light range, and sufficient light intensity and efficiency cannot be achieved. In the prior art, it has been impossible to achieve a highly practicable EL device phosphor that emits high intensity light in the UV range or an adjacent range when excited by an electric field.

The present invention is aimed at solving the above problems, and an objective thereof is to provide a phosphor that emits high intensity light in the UV range or the nearby visible light range when excited by an electric field, to provide a method for manufacturing the same, and to provide a particle-dispersed EL device using the same.

In particular, an object of the present invention is to provide a phosphor that has a function of emitting high-intensity UV light via electroluminescence, to provide a method for manufacturing same, and to provide a particle-dispersed EL device that uses the phosphor as a surface light emitter.

### [Means Used to Solve the Above-Mentioned Problems]

In view of the above-mentioned objectives, and as a result of thoroughgoing research, the present inventors arrived at the present invention, having discovered that a high-intensity phosphor that has an excellent function whereby visible light or UV rays are emitted by means of electroluminescence can be obtained by having the interior of the phosphor to comprise a conductive phase that includes a highly conductive carbon component; and that such a phosphor is extremely useful as the surface light emitter in a particle-dispersed EL device.

Specifically, the present invention is characterized in having the following structure.
(1) An EL phosphor characterized in that the phosphor contains a carbon component as a conductor phase.
(2) The EL phosphor according to (1), wherein the carbon component forming the conductor phase is at least one type of conductive carbon particle selected from a group comprising carbon nanotubes, carbon nanohorns, fullerenes, carbon fiber, or graphite.
(3) The EL phosphor according to (1) or (2), wherein the phosphor is a sulfide.
(4) The EL phosphor according to (3), wherein a main component of the phosphor is ZnS.
(5) The EL phosphor according to (4), wherein a general formula of the phosphor is expressed as Zn(1-x) AₓS : Cu, D (where A is at least one type of group 2A element selected from a group composed of Be, Mg, Ca, Sr, and Ba; D is a coactivator selected from at least one type of element from group 3B or group 7B elements; and 0≤x<1).
(6) The EL phosphor according to (4), wherein the general formula of the phosphor is expressed as Zn(1-x) AₓS : Ag, D (where A is at least one type of group 2A element selected from a group composed of Be, Mg, Ca, Sr, and Ba; D is a coactivator selected from at least one type of element from group 3B or group 7B elements; and 0≤x<1).
(7) The EL phosphor according to (1) or (2), wherein the phosphor is a amorphous oxynitride that emits light when excited by an electrical field.
(8) The EL phosphor according to (7), characterized in that the phosphor is activated by at least one selected from a group composed of Eu²⁺, Gd³⁺, and Yb²⁺.
(9) The EL phosphor according to (7) or (8), wherein the amorphous oxynitride is B-N-O.
(10) The EL phosphor according to any of (1) to (9), wherein the conductor phase is spherical.
(11) The EL phosphor according to any of (1) to (9), wherein the conductor phase is acicular.
(12) The EL phosphor according to (10), wherein a diameter of the spherical conductor phase is 1 to 100 nm.
(13) The phosphor according to (11), wherein a cross-sectional diameter of the acicular conductor phase in a direction orthogonal to the major axis is 1 to 100 nm.
(14) The phosphor according to (11), wherein the aspect ratio, which is expressed as the major axis of the acicular conductor phase versus the cross-sectional diameter in a direction orthogonal to the major axis, is 100 or greater.
(15) The EL phosphor according to (11), wherein the acicular conductor phase is unidirectionally oriented.
(16) The EL phosphor according any of (1) to (15), wherein the conductor phase content is 0.001 to 5 vol%.
(17) The EL phosphor according any of (1) to (15), wherein the conductor phase content is 0.001 to 1 vol%.
(18) The EL phosphor according any of (1) to (15), wherein the conductor phase content is 0.005 to 0.5 vol%.
(19) The EL phosphor according to any of (1) to (18), wherein the electrical conductivity of the conductor phase is greater than 1×10⁰ Ω⁻¹ cm⁻¹.
(20) The EL phosphor according to any of (1) to (18), wherein the electrical conductivity of the conductor phase is greater than 1×10² Ω⁻¹ cm⁻¹
(21) The EL phosphor according to any of (1) to (20), wherein the phosphor has a Blue-Cu light-emitting function.
(22) The EL phosphor according to any of (1) to (21), wherein the peak wavelength of the EL spectrum is 400 nm or less.
(23) The EL phosphor according to any of (1) to (22), wherein UV rays having a wavelength of 380 nm are emitted.
(24) A method for manufacturing an EL phosphor according to (1), comprising a first step for dispersing a carbon component powder in a solution; a second step for dispersing or dissolving a phosphor raw material solute in the solvent; and a third step for subjecting the solution manufactured in the second step to a hydrothermal treatment, and depositing a phosphor is deposited on a periphery of the carbon component.
(25) The method for manufacturing an EL phosphor according to (24), wherein as a fourth step the phosphor powder obtained in the third step is subjected to a heat treatment.
(26) A particle-dispersed EL device wherein the phosphor according to any of (1) to (23) is contained in an emitter layer.

### [Effect of the Invention]

According to the present invention, there is provided a phosphor for emitting high-intensity UV light or visible light when excited by an electric field, a method for manufacturing same, and a particle-dispersed EL device for emitting high-intensity UV light.

In particular, when a ZnS:Ag phosphor that does not have the Cu₂S phase found in ordinary ZnS:Cu is used in the sulfide phosphor of the present invention, a high electric field concentrating effect occurs in the periphery of the carbon component when an AC electric field is applied and EL light is emitted because a highly conductive carbon nanotube, carbon nanohorn, or other carbon component is present in the interior of the phosphor. ZnS:Cu phosphors doped with Cu will emit light even without the conductive phase of the carbon component, but the intensity of the light is dramatically increased when a carbon component conductive phase is present therein. In particular, the effect of the conductive phase can be further increased by adding MgS or another phosphor matrix having a large band gap to the ZnS to form a mixed crystal, facilitating the emitting of light within the short-wavelength region, where the peak wavelength of the emitted light is 400 nm or less. Therefore, an inorganic EL device using this phosphor is extremely useful as a UV surface light emitter for efficiently exciting a photocatalyst.

### [Best Mode for Carrying Out the Invention]

As described above, a phosphor that has a sulfide as the matrix is doped using as an activator Cu ions or Ag ions, which do not efficiently emit EL light, and a conductive carbon component is dispersed in the interior of the phosphor to form a conductive phase, whereby a phosphor that emits intense light can be formed. In particular, when, e.g., a phosphor with a ZnS matrix is used, a mixed crystal matrix is formed by mixing ZnS as a base with MgS, CaS, or another group 2A element sulfide having a large band gap; Ag or Cu is added as an activator (acceptor), and Cl, Al, or another group 3B or group 7B element is added as a coactivator (donor), and Blue-Cu light is emitted. EL light having a wavelength of 400 nm or less or a short-wavelength light near this range can be emitted as a result.

A conductor phase is formed in the interior of the sulfide phosphor matrix by uniformly dispersing a conductive carbon component at a high density in the interior of the phosphor. The conductive carbon component used is preferably at least one component selected from the group consisting of carbon nanotubes, carbon nanohorns, fullerenes, carbon fiber, and graphite. In particular, a phosphor is preferably used that has carbon nanohorns and/or carbon nanotubes that have a large aspect ratio and are dispersed in the phosphor matrix. The conductive phase is preferably substantially formed only from carbon components, and the carbon component more preferably contains minimal amounts of Fe, Ni, Cr, or other impurities. This is because these elements reduce the light intensity, and the amount is more preferably limited to 1 ppm or less when these metallic elements are included.

It is possible to produce the phosphor, e.g., by common powder firing methods using a carbon nanotube powder and a powder comprising a phosphor matrix. However, the carbon nanotubes generally clump together due to their poor dispersiveness, and it is difficult to achieve a high aspect ratio with a carbon nanotube unit alone.

In the present invention, it is possible to prevent clumping by treating the carbon nanotubes while dispersed in the liquid phase, rather than while exposed in an ambient atmosphere. Described below is an example of the method for manufacturing a phosphor of the present invention wherein carbon nanotubes are used as the carbon component.

First, a carbon nanotube (CNT) dispersion is formed by dispersing CNT in a liquid. An aqueous system is preferably used as the liquid in view of the subsequent hydrothermal treatment. The carbon nanotubes are uniformly dispersed because various dispersion accelerators are added to the liquid. The pH may be adjusted in order to accelerate dispersion.

Next, the phosphor raw material components are added to the CNT dispersion. For example, a ZnSO₄ aqueous solution and a Na₂S aqueous solution are separately prepared, and both are added to the CNT dispersion to form a raw material solution. The raw material solution is loaded into a hydrothermal synthesis apparatus (autoclave), and the ZnSO₄ and the Na₂S react under the application of an appropriate temperature and pressure, whereupon ZnS nuclei form on the surface of the CNT. As the reaction progresses, the entire surface of the CNT will be covered with ZnS, and a ZnS powder containing CNT is soon formed. The resulting product is referred to as a phosphor precursor. The hydrothermal synthesis should be performed at a temperature of 200 to 300°C and a pressure of 2 to 3 MPa.

The phosphor precursor is then immediately removed to an ambient atmosphere and dried. The various elements functioning as the activator and coactivator are added and fired with the other components to form a phosphor. For example, Ag₂S and KCl or NaCl can be added when doping with Ag and Cl. The conductive phase remains unchanged because the carbon component does not react with the S. In order to manufacture the phosphor matrix as a mixed crystal of ZnS and MgS, MgS may be admixed simultaneously when the activator and coactivator are added immediately after the ZnS phosphor precursor has been manufactured by hydrothermal synthesis. This is because MgS is difficult to produce during hydrothermal synthesis.

The carbon nanotubes dispersed in the composite material produced as described above preferably have an aspect ratio of 100 or greater. If the aspect ratio is less than 100, the electric field concentrating effect in the periphery of the carbon nanotubes will decrease, the efficiency with which electrons are emitted by the carbon nanotubes will be lower, and the intensity of the EL light will decrease. The effect will reach saturation if the aspect ratio exceeds 100. Carbon nanohorns, fullerenes, carbon fiber, graphite, or the like can be used as the carbon component instead of carbon nanotubes.

The following is a particularly preferable ZnS phosphor matrix.

Phosphors expressed by the general formula Zn(1-x) AₓS : Ag, D (where A is at least one type of group 2A element selected from the group containing Be, Mg, Ca, Sr, and Ba; D is a coactivator and is at least one element selected from the group consisting of group 3B or group 7B elements; and 0≤x<1) emit light having the shortest wavelength among phosphors that have ZnS as a main component. In particular, not only does Ag replace the Zn position in the ZnS phosphor matrix, but high-energy Blue-Cu light is emitted when Ag is implanted in the interstices. Therefore, the peak wavelength of the emitted light is preferably 400 nm or less. This light is obtained by doping at a concentration at which the amount of the activator is greater than the amount of the coactivator. An activator with a concentration greater than that of the coactivator will enter the interstitial gaps without replacing the Zn position because the activator is electrically neutral.

The molar concentration of the Ag doped in the phosphor is preferably 0.01 to 1 mol% relative to the metallic element of the phosphor matrix. The intensity of the emitted light decreases considerably when the molar concentration is less than 0.01 mol%. The intensity of the emitted light reaches saturation when the molar concentration exceeds 1 mol%. The molar concentration of Ag is more preferably 0.01 to 0.5 mol% relative to the metallic element of the phosphor matrix. The molar concentration of the coactivator is preferably 0.1 to 80 mol% relative to the molar concentration of the Ag in the phosphor. The intensity of the emitted light will decrease when the molar concentration is less than 0.1 mol%. It is undesirable for the molar concentration to exceed 80 mol%. This is because intensity will begin to increase for the light that the longer-wavelength donor-acceptor (DA) pair emits at the same time as the Blue-Cu light.

In order to emit Blue-Cu light, the concentrations of the subsequently used activator and coactivator are preferably limited to the ranges described above. However, these values may not necessarily be the concentration of the starting material. In other words, the crystallinity is preferably increased in order to produce a phosphor that emits light with increased intensity, and a large quantity of flux is normally used for this purpose. KCl, NaCl, or another chloride is generally used. When the concentration of the flux is increased, the concentration of the coactivator contained in the starting material increases, and becomes greater than the concentration of the activator. However, since the amount in which Cl is dissolved in Zn to form a solid solution is low at about 0.1 mol%, the concentration of the activator in the phosphor can be made to exceed that of the coactivator concentration by increasing the concentration of Ag in the starting material to greater than 0.1 mol%, regardless of the amount of flux.

Strain is generated in the phosphor that has been fired for doping. Therefore, the phosphor powder obtained from the third step is heat treated as a fourth step at a temperature that is lower than the firing temperature, thereby eliminating the strain and allowing light to be emitted at high intensity.

The manufacturing method described above is also useful in fabricating phosphors in which Cu is used as an activator instead of Ag.

The description above pertained to a preferred phosphor matrix in which a material having a sulfide; i.e., ZnS, was used as the main component. However, an amorphous oxynitride can also be used as a phosphor matrix in the present invention. Depending on the material, EL light can be emitted using oxynitride phosphors, but the intensity thereof is known to be low. The amorphous oxynitride phosphor of the present invention can provide a UV-emitting, particle-dispersed EL device whereby UV light can be emitted at a high intensity when excited by an electric field. This is accomplished by including a highly conductive carbon component phase in the interior of the phosphor in the same manner as the sulfide phosphor.

In the oxynitride phosphor of the present invention, a conductor phase comprising a conductive carbon component is uniformly dispersed in the interior of an amorphous oxynitride phosphor matrix preferably comprising B-N-O, Si-O-N, Al-O-N, Ga-O-N, Al-Ga-O-N, In-Ga-O-N, or In-Al-O-N. An amorphous oxynitride phosphor containing a conductor phase that emits light when excited by an electric field can be obtained by doping with Eu²⁺, Gd³, Yb²⁺, or another rare earth ion. For example, a phosphor that emits UV rays at a high intensity when excited by an electric field can be invented by using Eu²⁺, Gd³, Yb²⁺, or another rare earth ion to dope an amorphous B-N-O phosphor containing a conductor phase having a size of 1 to 100 nm, making it possible to invent a particle-dispersed EL device for emitting UV rays at high intensity. Furthermore, a particle-dispersed EL device that emits light at an even higher intensity can also be produced by using Eu²⁺ to dope an amorphous oxynitride in which an acicular conductor phase is unidirectionally oriented, and dispersing in the light-emitting layer the unidirectionally oriented acicular conductor phase so that the acicular conductor phase is arranged orthogonally with respect to the electrode.

In the phosphor described above, the conductor phase introduced into the phosphor locally increases the electric field, and electrons from the conductor phase are implanted into the phosphor as a result. Electrons that have been accelerated by the electric field collide with Eu²⁺ ions, Gd³⁺ ions, Yb²⁺ ions, or other elements in the emission sites, and this is considered to excite the emission sites. Accordingly, light is emitted from the entire phosphor, as opposed to the surface or exterior of the phosphor, in a product obtained by the uniform dispersion of the conductor phase in the phosphor, and light of increased intensity is thought to be emitted thereby.

An example of a method for manufacturing a phosphor of the present invention was described above in which a sulfide phosphor contains carbon nanotubes as a conductor phase. However, the manufacturing method can be appropriately applied to techniques for manufacturing other phosphors according to the present invention. Further embodiments are described below using as an example a B-N-O amorphous oxynitride phosphor, which is an amorphous oxynitride phosphor containing a carbon conductor phase.

Eu(NO₃), which is used as a Eu²⁺ source, or Gd(NO₃), which is used as a Gd³⁺ source, or another activator source is weighed; H₃BO₃ or another boron source and (NH₂)₂CO or another nitrogen source are weighed; and these raw materials are dissolved in water or another liquid. Carbon nanotubes, carbon nanohorns, fullerenes, graphite, or other carbon components are subsequently added. The raw materials are uniformly mixed, and the precipitates are recovered after the solution is dried. The recovered precipitates are subjected to a reduction treatment in a hydrogen atmosphere, and the interior of the phosphor is doped with the activator in an ionic state. A heat treatment is carried out subsequent to the reduction treatment, and a sintered compact is obtained. The sintered compact is crushed using a mortar to obtain a B-N-O amorphous phosphor powder containing a carbon conductor phase. Oxynitrides other than those described above can also be obtained by a substantially similar method.

In either the amorphous oxynitride phosphor or the sulfide phosphor described above, the electrical conductivity of the conductor phase is preferably increased to be greater than 1×10⁻² Ω⁻¹ cm⁻¹ in order for sufficient light to be emitted on excitation by an electric field. The conductivity is preferably 1×10⁰ Ω⁻¹ cm⁻¹ or greater, and even more preferably 1×10² Ω⁻¹ cm⁻¹ or greater, and the intensity is further increased when light is emitted on excitation by an electric field.

The conductor phase can be of a spherical or acicular configuration. If spherical, the phase preferably has an average grain size of 1 to 100 nm. Spherical particles with a grain size of less than 1 nm are neither readily obtained in the form of a raw material nor readily synthesized. When the grain size exceeds 100 nm, the electric field concentration is inadequate, and EL devices containing this phosphor do not readily emit UV light. When particles of an acicular conductive carbon component are used, the cross-sectional diameter orthogonal to the major axis is preferably 1 to 100 nm. Particles of acicular conductive carbon components having an average cross-sectional diameter that is less than 1 nm are, similar to spherical particles, not readily obtained as raw materials. Furthermore, in EL devices containing the resulting phosphor, aspects relating to an adequate electric field concentration and light intensity dictate that the cross-sectional diameter preferably not exceed 100 nm.

If the conductor phase content is 0.001 vol% to 5 vol% relative to the entire phosphor, the resulting effect will be preferable in terms of the light emitted by excitation with the electric field. If the content is less than 0.001 vol%, the conductor phase will not necessarily be adequate, and light may not always be emitted. If the content exceeds 5 vol%, a phenomenon will occur in which the conductor phases come into contact with each other, and the interior of the phosphor becomes continuous, causing the emitted light to be unstable. An adequate effect can be achieved if the content is 0.001 vol% to 5 vol%, but the degree of blackening thought to be caused by the conductor phase will increase if the conductor phase content exceeds 1 vol%. Therefore, the content is preferably 0.001 vol% to 1 vol%, and more preferably 0.005 vol% to 0.5 vol%. Blackening of the phosphor substantially does not occur, which is preferable.

The conductive phase of the acicular conductive carbon component particles in the phosphor is unidirectionally arranged, and the phosphor is dispersed in the light-emitting layer of the particle-dispersed EL device so that the oriented acicular conductor phases are orthogonally oriented with respect to the electrode, whereby the electric field is efficiently concentrated and the number of electrons implanted in the phosphor is increased.. The intensity of the emitted light can thereby be further increased by excitation with the electric field.

For example, when excited by an electric field, an Eu²⁺-activated B-NO amorphous oxynitride phosphor of the present invention that contains a conductor phase will emit UV rays at high intensity so that the maximum brightness is at 372 nm. An Eu²⁺-activated B-N-O amorphous oxynitride phosphor contains 1 to 20 atm% of Eu relative to the B element, and 10 to 40 wt% oxygen. In order to produce maximum brightness, the phosphor may contain 5 atm% of Eu relative to the B element, and 25 wt% oxygen. Outside this range, however, the intensity of the emitted light will be less than 1/100 of the intensity at the maximum brightness, which is undesirable.

Working examples of the present invention are described below along with specific examples of the method of manufacturing a phosphor of the present invention.

### [Working Examples]

### [Working Example 1]

### (Carbon nanotube dispersion)

0.0123 g of carbon nanotubes (CNT) having a variety of aspect ratios was dispersed in water at a concentration of 0.001 wt% to prepare 1230 mL of a liquid.

### (Manufacture of ZnS-CNT composite powder)

(1) Raw material
   ZnSO₄ powder; average grain size: 0.5 µm
   Na₂S powder; average grain size: 0.5 µm
(2) Hydrothermal treatment
   The ZnSO₄ powder and Na₂S powder were added to the CNH dispersion so that Zn:S=1:1 (molar ratio). The amount added was adjusted to yield 100 g of ZnS. The mixture was loaded into an autoclave, and treatment was carried out for 5 hours at a temperature of 500°C and a pressure of 2 MPa. The powder resulting from the treatment was recovered and dried to yield a ZnS-CNT composite powder.

### (Manufacture of phosphor)

(1) Raw material
   **[0046]** ZnS-CNT composite powder: 20 g
   Activator raw material (Ag source): Ag₂S powder having an average grain size of 0.1 µm
   Coactivator raw material (Cl source): KCl powder having an average grain size of 2 µm
(2) Mixing
   The raw material powders were gathered to form a prescribed composition as shown in Table 1-1, and mixed in ethanol. The raw material mixture was then dried by vaporizing various solvents using an evaporator to which dry argon was fed.
(3) Firing
   The recovered raw material mixture was loaded into a 20 mmx200 mm×20 mm (height) covered quartz crucible, and fired for 6 hours in 1 atm of Ar gas at the temperatures shown in Table 1-2. The mixture was then allowed to cool naturally in an oven.

The average grain size of the resulting phosphor was observed by SEM. The amount of doping in the phosphor was measured by Auger spectroscopy.

The concentrations of the activator and coactivator shown in Tables 1-1 and 1-2 are shown in terms of molar percent relative to the metal of the phosphor matrix, and the amount of carbon component is shown in terms of the percent by volume of the entire phosphor. The aspect ratio of the carbon component shown in the tables is the aspect ratio of the carbon component dispersed in the phosphor obtained as described above. The same applies to the other tables.

### (Method for evaluating wavelength of emitted light)

A concavity measuring 40 µm×40 µm×50 µm (depth) was formed on a 50 mm×50 mm×1 mm quartz glass substrate. Aluminum was deposited to a thickness of 0.1 µm to form a rear electrode. Ultrasound was used to mix the phosphor with castor oil at a volume fraction of 35 vol% to form a slurry, which was poured into the concavity. Last, the 50 mm×50 mm×1 mm quartz glass substrate, which was coated with a 0.1-µm-thick indium-tin oxide (ITO) transparent conductive film as a surface electrode, was used as a cap to form an EL device. For purposes of comparison, a phosphor was obtained and an EL device was manufactured without CNT being added in the method for manufacturing a phosphor described above.

In the EL devices described above, a lead wire was attached to both electrodes, and a 500 V, AC voltage with a frequency of 3000 Hz was applied. The spectrum of the emitted light was measured at the same sensitivity using a photonic analyzer. A comparison was made of the intensity of the emitted light at the peak wavelength.

The results are shown in Table 1-2.

EL light was not emitted when the CNT was not added (Nos. 1 and 2). EL light was emitted when the CNT had been added. The particles grew as the amount of the coactivator increased, and the intensity of the EL light increased simultaneously. However, the grain size and the light intensity reached saturation (Nos. 3 to 7) when the content exceeded 7 mol% in the raw material. In No. 3, the concentration of coactivator in the phosphor relative to the activator concentration was excessively high; therefore, the emitted light wavelength indicated blue light, which was thought to be DA pair emitted light. The intensity of the emitted light tended to increase as the aspect ratio of the CNT increased, but reached saturation when the aspect ratio exceeded 100 (Nos. 7 to 9).

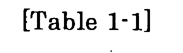

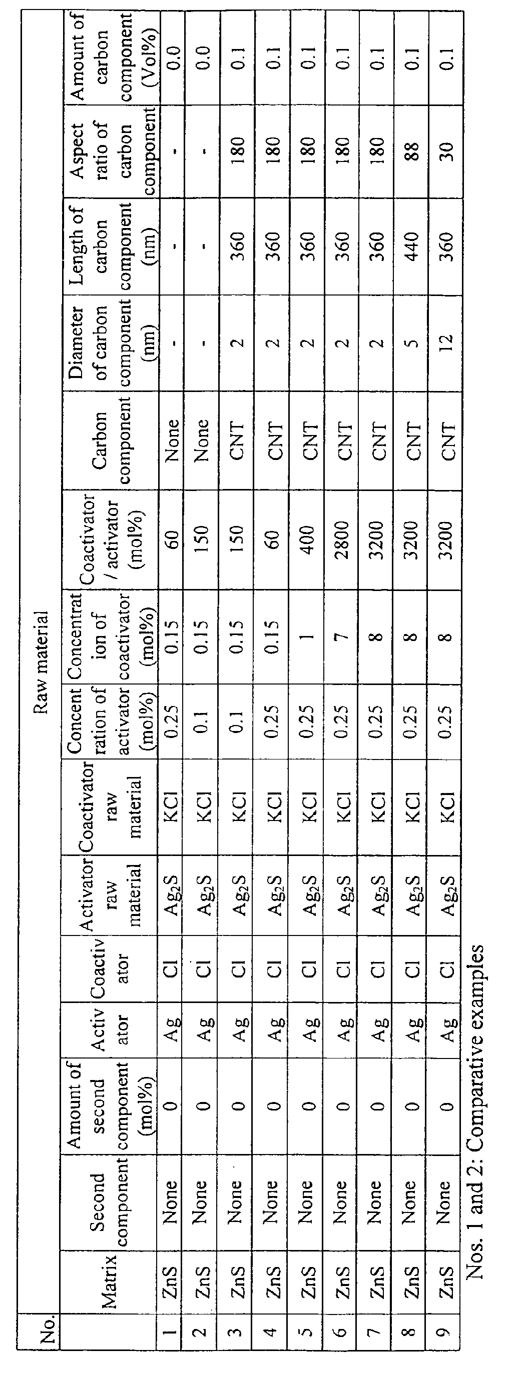

**[Table 1-2]**

| No. | Firing Conditions | | Phosphor doping amount | | | | Light emitting properties | |
|---|---|---|---|---|---|---|---|---|
| | Firing tempera ture (°C) | Anneal ing temper ature (°C) | Activator concentr ation (mol%) | Coactivator concentrati on (mol%) | Coactivator /activator (mol%) | Average grain size (µm) | Peak wavelength of EL light (nm) | Intensity relative to the peak wavelength |
| 1 | 1000 | - | 0.25 | 0.11 | 44 | 1.5 | None | 0 |
| 2 | 1000 | - | 0.1 | 0.11 | 110 | 1.6 | None | 0 |
| 3 | 1000 | - | 0.1 | 0.11 | 110 | 1.4 | 454 | 20 |
| 4 | 1000 | - | 0.25 | 0.11 | 44 | 1.6 | 399 | 20 |
| 5 | 1000 | - | 0.25 | 0.11 | 44 | 12 | 399 | 80 |
| 6 | 1000 | - | 0.25 | 0.11 | 44 | 18 | 399 | 100 |
| 7 | 1000 | - | 0.25 | 0.11 | 44 | 18.2 | 399 | 100 |
| 8 | 1000 | - | 0.25 | 0.11 | 44 | 18.2 | 399 | 98 |
| 9 | 1000 | - | 0.25 | 0.11 | 44 | 18.2 | 399 | 44 |

| | | | | | | | | |
|---|---|---|---|---|---|---|---|---|
| Nos. 1 and 2: Comparative examples | | | | | | | | |

### [Working Example 2]

### (Carbon nanohorn dispersion)

0.0123 g of carbon nanohorns (CNH) was dispersed in water at a concentration of 0.001 wt% to prepare 1230 mL of a liquid.

### (Manufacture of a ZnS-CNH composite powder)

(1) Raw material
   ZnSO₄ powder; average grain size: 0.5 µm
   Na₂S powder; average grain size: 0.5 µm
(2) Hydrothermal treatment
   The ZnSO₄ powder and the Na₂S powder were added to the CNH dispersion so that Zn:S=1:1 (molar ratio). The amount added was adjusted to yield 100 g of ZnS. The mixture was loaded into an autoclave, and treatment was carried out for 5 hours at a temperature of 500°C and a pressure of 2 MPa. The powder resulting from the treatment was recovered and then dried to yield a phosphor precursor.

### (Manufacture of phosphor)

(1) Raw material
   Phosphor precursor: 20 g
   Mixed crystal matrix: MgS powder, CaS powder, and SrS powder, each having an average grain size of 0.1 µm
   Activator raw material (Ag source): Ag₂S powder having an average grain size of 0.1 µm
   Coactivator raw material (Cl source): KCl powder having an average grain size of 2 µm
(2) Mixing
   The raw material powder was gathered to form a prescribed composition as shown in Table 2-1, and was mixed in ethanol. The raw material mixture was then dried by vaporizing various solvents using an evaporator to which dry argon was fed.
(3) Firing
   The recovered raw material mixture was loaded into a 20 mm×200 mm×20 mm (height) covered quartz crucible, and fired for 6 hours in 1 atm of Ar gas at various temperatures. The mixture was then allowed to cool naturally in an oven.
(4) Annealing
   After cooling, a portion of the samples underwent annealing for 2.5 hours at 750°C in 1 atm of Ar gas. Samples that did not undergo annealing were also produced.

The average grain size of the resulting phosphors was observed by SEM. The amount of doping in the phosphors was measured by Auger spectroscopy.

### (Method for evaluating wavelength of emitted light)

A concavity measuring 40 µm×40 µm×50 µm (depth) was formed on a 50 mmx50 mmx1 mm quartz glass substrate. Aluminum was deposited to a thickness of 0.1 µm to form a rear electrode. Ultrasound was used to mix the phosphor with castor oil at a volume fraction of 35 vol% to form a slurry, which was poured into the concavity. Last, the 50 mm×50 mm×1 mm quartz glass substrate, which was coated with a 0.1-µm-thick indium-tin oxide (ITO) transparent conductive film as a surface electrode, was used as a cap to form an EL device.

In the EL devices described above, a lead wire was attached to both electrodes, and a 500 V, AC voltage with a frequency of 3000 Hz was applied. The spectrum of the emitted light was measured at the same sensitivity using a photonic analyzer. A comparison was made of the intensity of the emitted light at the peak wavelength. The results are shown in Table 2-2.

The intensity of the emitted light increased as the amount of CNH increased, but the intensity reached saturation when the amount exceeded 1 vol% (Nos. 11 to 14). EL light was emitted even when the phosphor matrix was a crystal formed by mixing ZnS with CaS (No. 15) and SrS (No. 16). The intensity of the emitted light increased when a heat treatment was carried out after the primary firing performed for doping (No. 17).

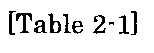

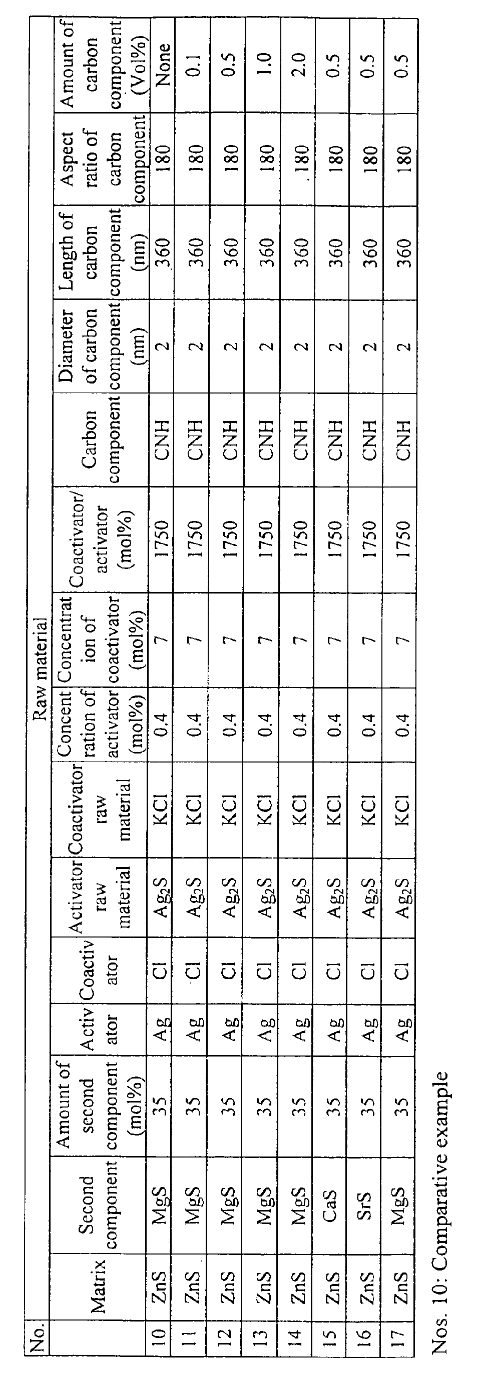

**[Table 2-2]**

| No. | Firing Conditions | | Phosphor doping amount | | | | Light emitting properties | |
|---|---|---|---|---|---|---|---|---|
| | Firing temperature (°C) | Annealing temperature (°C) | Activator concentration (mol%) | Coactivator concentration(mol%) | Coactivator/ activator (mol%) | Average grain size (µm) | Peak wavelength of EL light (nm) | Intensity relative to the peak wavelength |
| 10 | 1020 | - | 0.4 | 0.12 | 30 | 17 | None | 0 |
| 11 | 1020 | - | 0.4 | 0.12 | 30 | 17.2 | 366 | 30 |
| 12 | 1020 | - | 0.4 | 0.12 | 30 | 16.9 | 366 | 100 |
| 13 | 1020 | - | 0.4 | 0.12 | 30 | 17.2 | 366 | 125 |
| 14 | 1020 | - | 0.4 | 0.12 | 30 | 17.3 | 366 | 80 |
| 15 | 1020 | - | 0.4 | 0.12 | 30 | 16.9 | 370 | 96 |
| 16 | 1020 | - | 0.4 | 0.12 | 30 | 16.9 | 373 | 93 |
| 17 | 1020 | 750 | 0.4 | 0.12 | 30 | 16.9 | 366 | 122 |

| | | | | | | | | |
|---|---|---|---|---|---|---|---|---|
| Nos. 10: Comparative example | | | | | | | | |

### [Working Example 3]

A phosphor was manufactured in the same manner as Working Example 1 from raw materials of the composition shown in Table 3-1, except that Cu₂S having an average grain size of 0.1 µm was used instead of Ag₂S. The results are shown in Table 3-2.

When a Cu was used as an activator dopant, light was also emitted by an EL device in which a non-CNT-containing phosphor was used. However, the intensity was increased by adding CNT (Nos. 18 to 20).

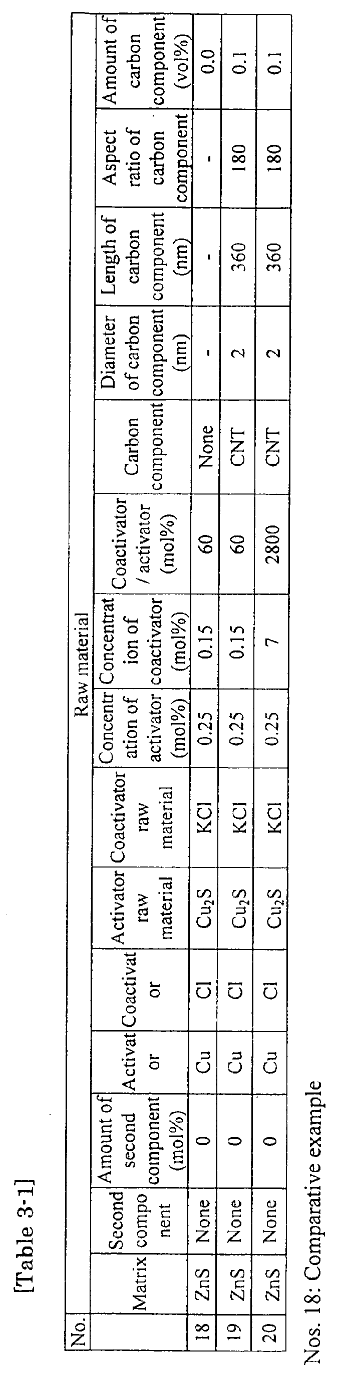

**[Table 3-2]**

| No. | Firing Conditions | | Phosphor doping amount | | | | Light emitting properties | |
|---|---|---|---|---|---|---|---|---|
| | Firing tempe rature (°C) | Anneal ing temper ature (°C) | Activator concentra tion (mol%) | Coactivator concentration (mol%) | Coactivator/ activator (mol%) | Average grain size (µm) | Peak wavelength of EL light (nm) | Intensity relative to the peak wavelength |
| 18 | 1000 | - | 0.25 | 0.11 | 44 | 1.5 | 467 | 14 |
| 19 | 1000 | - | 0.25 | 0.11 | 44 | 1.6 | 467 | 22 |
| 20 | 1000 | - | 0.25 | 0.11 | 44 | 1.8 | 467 | 100 |

| | | | | | | | | |
|---|---|---|---|---|---|---|---|---|
| Nos. 18: Comparative example | | | | | | | | |

### [Working Example 4]

### (Synthesis of B-N-O amorphous phosphor containing carbon conductor phase)

Eu(NO₃)₃ was used as the Eu²⁺ source, H₃BO₃ was used as the boron source, and (NH₂)₂CO was used as the nitrogen source to synthesize a Eu²⁺-activated B-N-O amorphous phosphor containing a carbon conductor phase. Carbon nanotubes having a regulated grain size were used as the carbon conductor phase.

Eu(NO₃)₃ and H₃BO₃ were weighed out so that the Eu/B ratio was 0.05, and (NH₂)₂CO and H₃BO₃ were weighed out so that the N/B ratio was in a range of 1 to 20. The composition was adjusted to yield a final oxygen content of 5 wt%. The raw materials were completely dissolved in 80°C deionized water, and the carbon nanotubes were then added. Stirring was carried out for three hours by a magnetic stirrer in order to uniformly mix the raw materials. The raw materials were then kept at 80°C in a constant-temperature dryer, the solution was dried, and precipitates were recovered. About 15 g of the recovered precipitates was introduced into a 150-cc covered alumina-silica crucible, and was subjected to a reduction treatment in a hydrogen atmosphere. Eu³⁺ ions in the raw material were doped in an Eu²⁺ ion state as a result of the reduction treatment in a hydrogen atmosphere. ESR analysis (electron spin resonance analysis) was performed to confirm that the Eu ions were in the Eu²⁺ ion state. During the reduction, the temperature was increased from room temperature to 400°C at a rate of 100°C/hour, and then kept at 400°C for 3 hours. The temperature was subsequently further increased from 400°C to 900°C at a rate of 100°C/hour, and then kept at 900°C for 12 hours. The temperature was then lowered, resulting in a spongy sintered compact, which was then crushed in a mortar to yield an Eu²⁺-activated B-N-O amorphous phosphor powder containing a carbon conductor phase.

### (Manufacture of an EL device)

An EL device (EL panel) was manufactured according to the procedure below in order to evaluate the characteristics of the synthesized phosphor containing a conductor phase. A dielectric binder cyanoresin was dissolved in acetone in a concentration of 20%. The cyanoresin solution was then divided into two parts. In one part, BaTiO₃ with a weight three times that of the cyanoresin was added and dispersed to form an insulation layer ink. In the other part, a phosphor with a weight two times that of the cyanoresin was added and dispersed to form a light-emitting layer ink. Next, the insulation layer ink was applied to a rear-electrode aluminum plate so that the thickness of the insulation film would be 20 mm upon drying. The light-emitting layer ink was applied on the insulation layer so that the thickness of the light-emitting layer would be 50 mm upon drying. The insulation layer and light-emitting layer were applied using screen printing.

After both the insulation layer and the light-emitting layer were formed, the sheet was dried for 8 hours in a constant-temperature dryer kept at 80°C. Silver paste was then used to draw a 1-mm-wide power collection line around the periphery of the ITO-side of a transparent conductor film sheet in which polyethylene terephthalate (PET) was coated with indium-tin oxide (ITO). Adhesive tape was used to attach a lead terminal to one location along the power collection line. A heat press was used to subject the ITO-side of the transparent conductor film sheet and the light-emitting layer of the previously prepared sheet to compression bonding under an applied temperature of 140°C and pressure of 10 kg/cm², resulting in an EL device.

### (Evaluation of emitted light)

A 100 V, 400 Hz AC electric field was applied to the aluminum rear electrode and the lead terminal connected to the power collection line drawn on the ITO of the resulting EL device, causing the phosphor to be excited by the electric field and emit light. The wavelength and intensity of the light were measured using a spectroscope. An optical fiber light receptor was tightly attached to the EL device in order to remove the effect of ambient light during the measurements.

### (Cross-sectional diameter of acicular conductor phase)

An EL device manufactured using an Eu²⁺-activated B-N-O phosphor containing a carbon-nanotube (CNT) acicular conductor phase emitted 372 nm light when excited by an electric field. Table 4 shows the relationship between the intensity of the 372 nm light emitted by the resulting EL device, the cross-sectional diameter in the direction orthogonal to the major axis of the carbon-nanotube (CNT) acicular conductor phase in the phosphor containing 0.01 vol% of the conductor phase relative to the entire phosphor, and the aspect ratio (major axis/cross-sectional diameter). The cross-sectional diameter was measured by TEM observation to obtain the average cross-sectional diameter of 20 acicular conductor phases. No acicular conductor phase having an average cross-sectional diameter of less than 1 nm was present, nor could one be synthesized. When the cross-sectional diameter of the acicular conductor phase exceeded 100 nm, the intensity of the 372 nm light decreased by two orders of magnitude in comparison to that obtained at a 20 nm diameter, at which maximum brightness was produced. It is believed that when the cross-sectional diameter of the acicular conductor phase exceeds 100 nm, the concentration of the electric field is inadequate, and the light intensity decreases.

**[Table 4]**

| Cross-sectional Diameter of Acicular Conductor Phase and Light Intensity | | | | | | |
|---|---|---|---|---|---|---|
| Cross-sectional diameter (nm) | 1 | 5 | 10 | 20 | 90 | 200 |
| Conductor phase | CNT | CNT | CNT | CNT | CNT | CNT |
| Aspect ratio | 120 | 120 | 120 | 120 | 120 | 120 |
| Light intensity at 372 nm (a.u.) | 1135 | 1579 | 1863 | 2690 | 2250 | 98 |

### [Industrial Applicability]

The particle-dispersed EL device in which a phosphor of the present invention is used can be employed as a light source for exciting anatase TiO₂ as well as a variety of other photocatalysts. The present invention can be also be used as a full-color EL device by coating a particle-dispersed EL device in which the phosphor of the present invention is used with an RGB phosphor that emits light in the visible light range when excited by UV rays emitted by the phosphor of the present invention.

## Claims

1. An EL phosphor **characterized in** comprising a carbon component as a conductor phase in the interior of the phosphor.

2. The EL phosphor according to claim 1, wherein the carbon component forming the conductor phase is at least one type of conductive carbon particle selected from the group consisting of carbon nanotubes, carbon nanohorns, fullerenes, carbon fiber, and graphite.

3. The EL phosphor according to claim 1 or 2, wherein the phosphor is a sulfide.

4. The EL phosphor according to claim 3, wherein a main component of the phosphor is ZnS.

5. The EL phosphor according to claim 4, wherein a general formula of the phosphor is expressed as Zn(1-x) AₓS : Cu, D (where A is at least one type of group 2A element selected from the group consisting of Be, Mg, Ca, Sr, and Ba; D is a coactivator and is at least one element selected from the group consisting of group 3B or group 7B elements; and 0≤x<1).

6. The EL phosphor according to claim 4, wherein the general formula of the phosphor is expressed as Zn(1-x) AₓS : Ag, D (where A is at least one type of group 2A element selected from the group consisting of Be, Mg, Ca, Sr, and Ba; D is a coactivator and is at least one element selected from the group consisting of group 3B or group 7B elements; and 0≤x<1).

7. The EL phosphor according to claim 1 or 2, wherein the phosphor is an amorphous oxynitride that emits light when excited by an electric field.

8. The EL phosphor according to claim 7, **characterized in that** the phosphor is activated by at least one element selected from the group consisting of Eu²⁺, Gd³⁺, and Yb²⁺.

9. The EL phosphor according to claim 7 or 8, wherein the amorphous oxynitride is B-N-O.

10. The EL phosphor according to any of the claims 1 to 9, wherein the conductor phase is spherical.

11. The EL phosphor according to any of the claims 1 to 9, wherein the conductor phase is acicular.

12. The phosphor according to claim 11, wherein a cross-sectional diameter of the acicular conductor phase in a direction orthogonal to the major axis is 1 to 100 nm.

13. The phosphor according to claim 11, wherein the aspect ratio, which is expressed as the major axis of the acicular conductor phase versus the cross-sectional diameter in a direction orthogonal to the major axis, is 100 or greater.

14. The EL phosphor according to claim 11, wherein the acicular conductor phase is unidirectionally oriented.

15. The EL phosphor according to any of the claims 1 to 14, wherein the phosphor has a Blue-Cu light-emitting function.

16. The EL phosphor according to any of the claims 1 to 15, wherein the peak wavelength of the EL spectrum is 400 nm or less.

17. The EL phosphor according to any of the claims 1 to 16, wherein UV rays having a wavelength of 380 nm are emitted.

18. A method for manufacturing an EL phosphor according to claim 1, comprising a first step for dispersing a carbon component powder in a solution; a second step for dispersing or dissolving a phosphor raw material solute in the solvent; and a third step for subjecting the solution manufactured in the second step to a hydrothermal treatment, and depositing a phosphor on a periphery of the carbon component.

19. The method for manufacturing an EL phosphor according to claim 18, wherein, as a fourth step, the phosphor powder obtained in the third step is subjected to a heat treatment.

20. A particle-dispersed EL device wherein the phosphor according to any of the claims 1 to 17 is contained in a light-emitting layer.
